# EUROPEAN PATENT APPLICATION

(11) **EP 1 712 811 A1**
(43) Date of publication of application: **18.10.2006**
(21) Application number: 05425235.8
(22) Date of filing: 15.04.2005
(51) Int. Cl.: F16D 41/30

(54) **One-way transmission device for a hub of a rear wheel of a bicycle, pawl carrying body for such device and hub comprising such device**

(71) Applicant: CAMPAGNOLO S.R.L., I-36100 Vicenza (IT)
(72) Inventor: Meggiolan, Mario, 36051 Creazzo (Vicenza) (IT)
(74) Representative: Castiglia, Paolo

(57) **Abstract**

A one-way transmission device (1) for a hub of a rear wheel of a bicycle, comprising a pawl carrying body (10) and a plurality of pawls (20) housed in respective seats (30) formed on a pawl carrying body (10). The pawls (20) are made of a material having high structural resistance, such as for example steel or titanium, while the pawl carrying body (10) is made of a material that is lighter in weight than that of the pawls (20), for example an aluminium alloy. In this way, a device (1) is obtained that is lighter in weight than that of the prior art. To reduce to a minimum the wear due to abrasion caused by slight rotation movements of the pawls (20) in the seats (30), contacting means (40, 60) made of a wear resistant material are inserted between each pawl (20) and its respective seat (30). In a first embodiment, such contacting means (40, 60) comprises a pawl housing shell (40) made of steel or titanium and integrally associated with the respective seat (30). In a second embodiment, the contacting means (40, 60) comprises a wear resistant coating layer (60) applied on the respective seat (30) by means of a surface deposition process.

## Description

The present invention relates to a one-way transmission device for a hub of a rear wheel of a bicycle. The invention also relates to a pawl carrying body for such device and a hub comprising such device.

As is known, a rear wheel of a bicycle comprises a plurality of spokes extended from the hub, that constitutes the central element of the wheel intended to be associated with the frame of the bicycle, and the rim on which the tyre is mounted.

In turn, the hub comprises a body (specifically referred to as hub body) of a substantially tubular shape and on which the spokes of the bicycle are intended to be mounted, and a shaft associated with said body by means of bearings and longitudinally extended therein. Such shaft is intended to be fixed at its free ends to the forks of the bicycle frame.

Due to the pedalling action of the cyclist, the hub body rotates with respect to said shaft, pulling in rotation the spokes and the rim.

The transmission of the motion from the bicycle chain to the hub body occurs by the engagement of a sprocket carrying body, on which is integrally mounted a sprocket assembly that engages with the chain and a one-way coupling device, positioned between the sprocket carrying body and the hub body and intended to allow the hub body to be integrally pulled in rotation with the sprocket carrying body during the pedalling action for moving the bicycle forward, while permitting the free rotation of the hub body with respect to the sprocket carrying body when the cyclist does not pedal, or when he pedals slowly, and in any case the bicycle continues to travel forward.

The assembly composed of the sprocket carrying body and the one-way coupling device is commonly called freewheel.

The sprocket carrying body has a substantially tubular shape and has, on an external surface thereof, a plurality of splines adapted to be mechanically coupled to the central openings of the sprockets when said sprockets are mounted on the sprocket carrying body.

The one-way coupling device comprises, in particular, a one-way transmission device integrally associated with the sprocket carrying body and a ring-shaped rack circonferentially and internally formed with the hub body at a free end thereof. In turn, the one-way transmission device comprises a pawl carrying body having a substantially tubular shape and integral in rotation with the sprocket carrying body and a plurality of pawls housed in specific seats formed circumferentially and externally on said pawl carrying body and intended to engage with the aforesaid rack during the pedalling action to make the bicycle travel forwards, and to disengage from the rack when the cyclist does not pedal, or pedals slowly, even though the bicycle continues to travel forward. In particular, the pawls are free to rotate within their respective seats and have an end portion that is thrust away from the pawl carrying body towards the rack by specific elastic means (so as to protrude from this body).

The sprocket carrying body, the pawl carrying body and the hub body have a central through hole wherein a shaft extending along a main axis, that coincides with the rotation axis of the wheel and intended to be fixed to the rear forks of the bicycle frame, is inserted.

The sprocket carrying body, the pawl carrying body and the hub body are mounted adjacent to each other on such shaft. Specific anti-friction bearings are provided between the hub body and the shaft and between the sprocket carrying body and the shaft, such bearings being adapted to allow such bodies to rotate freely with respect to the shaft.

During the pedalling action to move the bicycle forward, the sprocket bearing body, the pawl bearing body and the hub body are integral in rotation with each other and transmit the movement to the wheel chain. In such operating configuration the pawls are thrust, by the specific elastic means provided in the pawl carrying body, in a first operating position wherein the free ends of the pawls protrude from the pawl carrying body and engage with the rack to allow the motion transmission from the sprocket carrying body to the hub body.

On the other hand, when the cyclist does not pedal, or when he pedals slowly, and the bicycle anyway travels forward, the sprocket carrying body and the pawl carrying body (always integral in rotation with each other) are free to rotate with respect to the hub body with an angular speed lower than the angular speed of the hub body. In such operating configuration, the pawls are thrust by the rack-teeth into a second operating position wherein the free ends of the pawls run along the rack without engaging the spaces between the teeth, thus allowing the rack to rotate with respect to the pawl carrying body.

All the one-way transmission devices known to the art have pawls and pawl carrying body made of heavy materials, typically steel or titanium.

In particular, one-way transmission devices are known in which the pawl carrying body and sprocket carrying body constitute a single body made of steel or titanium, and the pawls are also made of steel or titanium.

In order to satisfy the constant needs of bicycle and/or bicycle component manufacturers, above all in the case of racing bicycles, to reduce to a minimum the total weight of the bicycle and therefore of the various components of the bicycle, it has been proposed in the past a technical solution wherein the pawl carrying body and the sprocket carrying body are made as separate and distinct pieces, such pieces being then intended to be integrally coupled to one another, for example by screwing. In such type of solution the sprocket carrying body is advantageously made of a lightweight material, in particular aluminium alloy, while the pawl carrying body and the pawls are always made of a heavyweight material, in particular, steel or titanium.

In order to further reduce the overall weight of the hub of the rear wheel of the bicycle, the Applicant has now designed and manufactured a one-way transmission device wherein the pawl carrying body is made of a lightweight material.

Therefore, the present invention relates, in a first aspect thereof, to a one-way transmission device for a hub of a rear wheel of a bicycle comprising:
- a pawl carrying body;
- a plurality of pawls housed in respective seats formed on said pawl carrying body;
characterised in that said pawl carrying body is made of a material lighter in weight than that of said plurality of pawls.

Advantageously, the use of different materials for the pawl carrying body and the pawls, and in particular, the manufacturing of a pawl carrying body in a material that is lighter in weight than that of the pawls, allows the manufacturing of a one-way transmission device that is lighter in weight than that of the prior art, thus satisfying the needs of the manufacturers to reduce to a minimum the total weight of the components of the bicycle.

In a preferred embodiment thereof, the pawl carrying body is made of an aluminium alloy, while the pawls are made of steel or titanium. However, it is within the scope of the present invention the use of materials different from aluminium alloy, such as magnesium or technopolymers that are charged or not, on condition that the materials employed are always lighter in weight than that of the pawls.

In the preferred embodiment thereof, the one-way transmission device of the present invention comprises contacting means in wear-resistant material interposed between each pawl of said plurality of pawls and the respective seat.

Advantageously, the use of said contacting means in wear resistant material at the interface between the pawls and the respective seats allows the abrasion caused by the the wear due to the slight rotation movements of the pawls in the respective seats to be reduced to a minimum, thus improving the reliability and the performance of the one-way transmission device of the invention as well as increasing the structural resistance thereof.

In a first embodiment of the one-way transmission device of the present invention, said contacting means comprises a pawl housing shell integrally associable with said seat.

These are advantageously structural elements that are separate and distinct from the pawls and the pawl carrying body. Such elements are intended to be removably associated with the seats formed in the pawl carrying body so as to be, when assembling is completed, totally integral with said seats.

Preferably, each pawl housing shell is made of the same material as the pawls. More preferably, said material is steel or titanium. Alternatively, the pawl housing shells can be made of a sintered material such as sintered steels obtained by means of a mold pressing technique followed by sintering, or by means of metal injection molding (MIM). Preferably, each pawl housing shell has a shape that is substantially conjugated to that of at least part of the respective seat and to that of at least part of the respective pawl. In this manner it is possible to accomplish an exact coupling between seats and pawl housing shells and between pawls and pawl housing shells, thus guaranteeing high levels of reliability and performance in operation.

Even more preferably, each pawl housing shell comprises a substantially cylindrical side surface portion arranged in abutment against a corresponding substantially cylindrical side surface portion of said seat and acting as an abutment surface for a corresponding substantially cylindrical side surface portion of said pawl, and at a first free end thereof, a first substantially flat frontal surface which extends perpendicular to a generatrix of said substantially cylindrical side surface portion, said first frontal surface being arranged in abutment against a substantially flat frontal surface of said seat and acting as an axial abutment surface for a corresponding substantially flat first frontal surface of said pawl.

Advantageously, the shape of the pawl housing shell, with regards to the body portion intended to be inserted between the pawl and the respective seat, is therefore completely identical and complementary to that of the pawl and of the respective seat. Thus, it is ensured a coupling with a very high precision level.

Preferably, each pawl housing shell comprises, at a second free end thereof opposite to said first free end, a substantially flat second frontal surface parallel to said first frontal surface and protruding from said substantially cylindrical side surface portion on the opposite side of said first frontal surface, wherein said second frontal surface is arranged in abutment against a corresponding abutment surface formed on a frontal surface of said pawl carrying body.

Advantageously, such second frontal surface of the pawl housing shell contributes, together with said first frontal surface, to ensure a firm coupling of the pawl housing shell in the respective seat.

In a first variant of the one-way transmission device of the present invention, the pawl housing shell comprises a pin mechanically coupled to an opening formed on the respective seat.

Alternatively, the pin can be formed on the seat while the opening is formed on the pawl housing shell.

Irrespective of the position of the pin and the opening, the reciprocal coupling between pin and opening allows the pawl housing shell to be integrally coupled with the respective seat.

Preferably the pin is formed in an eccentric position on the first frontal surface of said pawl housing shell, (or alternatively, on the first frontal surface of the seat) and said opening is formed in an eccentric position on said frontal surface of said seat (or alternatively, on the first frontal surface of said pawl housing shell). In this way, it is possible, in addition to provide a correctly centred assembly of the pawl housing shell in the respective seat, to prevent any rotation movement between the pawl housing shell and the respective seat.

In a second variant of the one-way transmission device of the present invention, the pawl housing shell is associated with the respective seat by the interposition of adhesive means. According to such a variant, it is not necessary to form any pin or any corresponding opening on the pawl housing shell and/or on the respective seat.

Preferably and irrespective of the specific embodiment chosen to allow the pawl housing shell to be correctly centred and firmly assembled in the respective seat, the pawl carrying body of the one-way transmission device of the present invention is substantially ring-shaped and the pawl housing shell comprises a groove extended circumferentially for part of said substantially cylindrical side surface portion and located at a respective groove formed on said pawls and at a circumferential groove formed on the external surface of said pawl carrying body.

Advantageously, the provision of said groove in the pawl housing shells allows that a single ring-shaped spring element (of a conventional type) can be housed in the circumferential groove formed on said pawl carrying body, in the groove formed on said pawl housing shell and in the groove formed on each pawl. Said spring element acts on said pawls to maintain said pawls in a first operating position wherein the end portion of said pawls is thrust radially and outwardly. In such operating position, the pawls are advantageously capable of engaging the rack formed on the hub body to-pull it in rotation.

As an alternative to a single ring-shaped spring element acting on all the pawls, the use of a plurality of elastic thrusting means is foreseen, each one being housed in a respective seat of said plurality of seats and acting on a respective pawl to push it in the aforesaid first operating position.

In a second embodiment of the one-way transmission device of the present invention, the aforesaid contacting means comprises, instead of the aforesaid pawl housing shells, a coating layer in a wear-resistant material applied to each seat of said seats by a superficial deposition process.

Advantageously, the increase in wear-resistance is achieved, in this case, by simply carrying out a localised surface hardening process at each seat.

The coating layer in wear-resistant material can be applied to each seat by means of any one of the following processes: chemical or electro-chemical galvanic deposition, heat spraying starting from metallic, ceramic or cermet powders, Combustion technology, Electric wire-arc, Plasma technology.

This coating layer can be applied to the seats only or to the whole pawl carrying body.

Preferably, the coating layer has a thickness between 5 and 100 µm. More preferably, the thickness of the coating layer is between 10 and 25 µm. Also in this embodiment of the one-way transmission device of the present invention, it is possible to envisage the use of a single ring-shaped spring element housed in the circumferential groove formed on the pawl carrying body and in the groove formed on each pawl and acting on each pawl to maintain said pawl in a first operating position wherein one end portion of said pawl protrudes from said pawl carrying body, or alternatively, the use of a plurality of elastic thrusting means, each of which being housed in a respective seat of said plurality of seats and acting on a respective pawl to thrust it into said first operating position.

In the preferred embodiment of the one-way transmission device of the present invention, irrespective of the use of pawl housing shells or surface coating processes of the seats, such seats are formed on an external surface of said pawl carrying body and said pawl carrying body is substantially ring-shaped and comprises, at each seat, a thickened zone extended radially and inwardly.

Advantageously, the presence of such thickened body portions right in the zones where the aforesaid seats are formed, contributes to increase the structural resistance of the pawl carrying body.

Moreover, in the preferred embodiment thereof, the one-way transmission device of the present invention further comprises a sprocket carrying body integrally formed with said pawl carrying body.

As an alternative, the pawl carrying body comprises a connecting means (for example, a threading) for its integral coupling to a sprocket carrying body.

The one-way transmission device described above is part of a one-way coupling device that comprises, in addition to the aforesaid one-way transmission device, a rack integrally formed with a hub body and which can be engaged by said pawls to be pulled in rotation when said pawls are in the aforesaid first operating position wherein an end portion of the pawls protrudes from the pawl carrying body, while the rack is free to rotate with respect to the one-way transmission device when this has an angular speed greater than that of the device itself.

In a second aspect thereof, the present invention relates to a pawl carrying body for a one-way transmission device of a hub of a rear wheel of a bicycle, characterised in that it is made of an aluminium alloy.

Advantageously, such a pawl carrying body can be used in a one-way transmission device of the type described above and therefore it allows all the advantages mentioned above with respect to the one-way transmission device of the present invention to be achieved.

Preferably, the pawl carrying body of the present invention comprises a plurality of seats for housing respective pawls and a coating layer of wear-resistant material applied on each seat of said plurality of seats by means of a surface deposition process.

Preferably, said coating layer can be applied by means of any one of the following processes: chemical or electro-chemical galvanic deposition, heat spraying starting from metallic, ceramic or cermet powders, Combustion technology, Electric wire-arc, Plasma technology.

In a particularly preferred embodiment thereof, the pawl carrying body of the present invention comprises a substantially ring-shaped body and a sprocket carrying body integrally formed with said substantially ring-shaped body.

Moreover, preferably, the seats are formed on an external surface of said pawl carrying body and said pawl carrying body is substantially ring-shaped and comprises, at each seat, a thickened zone extending radially and inwardly.

In a third aspect thereof, the present invention relates to a hub for a rear wheel of a bicycle, comprising a longitudinal shaft and, mounted on said longitudinal shaft, a hub body having a substantially tubular shape and provided, at a free end thereof, with a ring-shaped rack, and a one-way transmission device of the aforesaid type, said rack being integral in rotation with the pawl carrying body of said one-way transmission device when said pawls are in a first operating position wherein a free end of said pawls protrudes from the pawl carrying body and engages with the rack, the rack however being free to rotate with respect to said pawl carrying body when its angular speed is greater than the angular speed of the pawl carrying body.

Advantageously, such a hub, comprising a one-way transmission device of the kind described above, allows all the advantages mentioned above with respect to such device to be achieved.

Preferably, the longitudinal shaft of the aforesaid hub has, circumferentially, one or more depressed zones defined on a ring-shaped abutment element.

Further advantages and characteristics of the present invention will be made clearer from the following detailed description of some preferred embodiments thereof, made with reference to the attached drawings. In such drawings,
- figure 1 is a schematic and exploded perspective view of a first embodiment of a one-way transmission device according to the present invention;
- figure 2 is a schematic front view of a one-way coupling device comprising the device of figure 1 in assembled configuration;
- figure 3 is a schematic front view of a variant of the one-way coupling device shown in figure 2;
- figure 4 is a schematic perspective view of a detail of the device of figure 1;
- figure 5 is a schematic front view of the detail of figure 4;
- figure 6 is a front view of a one-way coupling device comprising a second embodiment of a one-way transmission device according to the present invention;
- figure 7 is a schematic front view of a variant of the one-way coupling device of figure 6;
- figure 8 is a schematic and exploded perspective view of a preferred embodiment of the one-way transmission device used in the one-way coupling device of figure 3;
- figure 9 is a schematic and exploded perspective view of a preferred embodiment of the one-way transmission device used in the one-way coupling device of figure 7;
- figure 10 is a schematic perspective view of the device of figures 8 or 9 facing a hub body;
- figure 11 is a schematic perspective view of a hub comprising the device of figures 8 or 9 and the hub body of figure 10 in assembled configuration;
- figure 12 is a partially sectioned side view of the hub of figure 11;
- figure 13 is a schematic perspective view of a detail of the hub of figure 11.

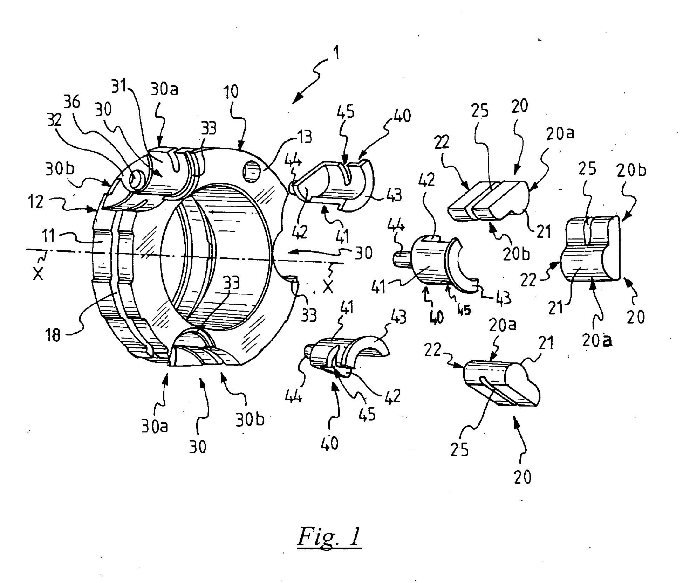

In figures 1 to 3 and from 6 to 10, a one-way transmission device according to the present invention is identified by numeral 1.

The device 1 comprises a pawl carrying body 10 which is substantially ring-shaped and which extends along a longitudinal axis X-X and three pawls, all identified by the numeral 20, which are of a conventional type, housed in respective seats, all identified with the numeral 30, formed on an external side surface 11 of the pawl carrying body 10 and angularly arranged at 120° from one another (in a totally conventional manner).

Obviously, within the scope of the present invention it is possible to envisage one-way transmission devices having a number of pawls (and corresponding seats) in a number other than three.

The seats 30 extend between a first front surface 12 of the pawl carrying body 10 and a second front surface 13 of the pawl carrying body 10 and are open frontally at the second front surface 13, while they have a front abutment surface 32 at the first front surface 12 of the pawl carrying body 10.

The seats 30 comprise a first support portion 30a adapted to house a corresponding support portion 20a of the pawls 20, and a second support portion 30b adapted to house an end portion 20b of the pawls 20.

The pawl carrying body 10 is made of a material lighter in weight than that of the pawls 20. In particular, in a preferred embodiment of the device 1 of the present invention, the pawl carrying body 10 is made of an aluminium alloy, while the pawls 20 are made of steel or titanium or with sinterised materials.

In alternative embodiments, the pawl carrying body 10 can be made of magnesium or with technopolymers that may be charged or not. In the embodiments provided as examples in the attached figures, specific contacting means made of wear-resistant material are interposed between the pawls 20 and the respective seats 30 to reduce to a minimum the wear due to the abrasion caused by the slight rotation movements of the pawls 20 in the respective seats 30. Such contacting means can be made as structural elements separate and distinct from the seats 20 or as a coating layer applied to each seat.

As shown in figures 1, 2, 3 and 8, in a first embodiment of the one-way transmission device 1 of the present invention, the contacting means are made as structural elements separate and distinct from the seats and comprises three pawl housing shells, all identified with the numeral 40, each one being housed in the support portion 30a of a respective seat 30 and housing the support portion 20a of a respective pawl 20.

The pawl housing shells 40 are made of a heavyweight and wear-resistant material, such as for example steel or titanium or, alternatively, with sinterised materials, such as for example, sinterised steel obtained by means of a mold pressing method followed by sinterising or by means of metal injection moulding (MIM). It is preferred the solution wherein the pawl housing shells 40 and the pawls 20 are made of the same material.

Each pawl housing shell 40 can be associated with the respective seat 30 in a removable manner or can be firmly associated with the respective seat by the interposition of adhesive means. In any case, the coupling between pawl housing shells 20 and seats 30 must be such that the pawl housing shells 40 are firmly fixed to the respective seats 30.

The pawl housing shells 40 have a shape that is substantially conjugated to that of the contacting portion 30a of the respective seats 30 and to that of the contacting portion 20a of the respective pawls 20.

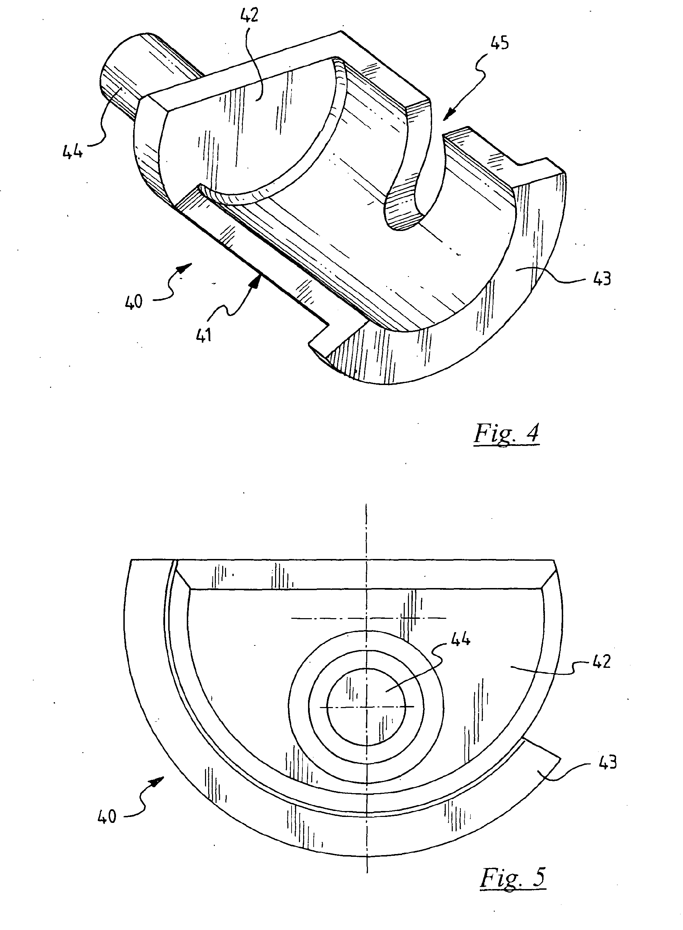

In particular, as shown in figures 1 and 4, each pawl housing shell 40 comprises a substantially convex cylindrical side surface portion 41 arranged in abutment against a corresponding substantially concave cylindrical side surface portion 31 of the respective seat 30 and acting as an abutment surface for a corresponding substantially convex cylindrical side surface portion 21 of the respective pawls 20 and, at a free end thereof, a substantially flat first front surface 42 extended in a perpendicular direction to a generatrix of said substantially cylindrical surface portion 41 and arranged in abutment against the abutment surface 32 of the respective seat 30. The first front surface 42 of each pawl housing shell 40 acts as an abutment surface for a corresponding front surface 22 of the respective pawl 20.

In a variant of the present invention, the cylindrical side surface portion of the pawl housing shell 40 could be concave instead of convex, and arranged in abutment against a corresponding substantially convex cylindrical side surface portion of the respective seat 30 and acting as an abutment surface for a corresponding substantially concave cylindrical side surface portion of the respective pawls 20. The concave shape of the surface of the pawl 20 determines, advantageously, a reduction in the heavy material constituting the pawl and therefore a reduction of its weight.

Furthermore, each pawl housing shell 40 comprises, on the opposite side of the said first free end, a substantially flat second front surface 43 parallel to the first front surface 42 and protruding from the substantially cylindrical side surface portion 41 on the opposite side of the first front surface 42. The second front surface 43 of each pawl housing shell 40 is arranged in abutment against a corresponding abutment surface 33 formed on the second front surface 13 of the pawl carrying body 10.

On the first front surface 42 of each pawl housing shell 40 a pin 44 is formed. The pin 44, in the assembled configuration, is inserted in a corresponding opening 36 formed on the respective seat 30 (in figure 1 only a single opening is visible). As shown in figure 5, the pin 44 is formed in an eccentric position on the front surface 42 in order to prevent any rotation movement of the pawl housing shell 40 in the respective seat 30, as well as to allow the housing shell 40 to be correctly centred when mounted in the respective seat 30.

In an alternative embodiment not shown, the pin 44 is formed in an eccentric position on the front surface 32 of the seat 30 and the opening 36 is formed in an eccentric position on the front surface 42 of the pawl housing shell 40.

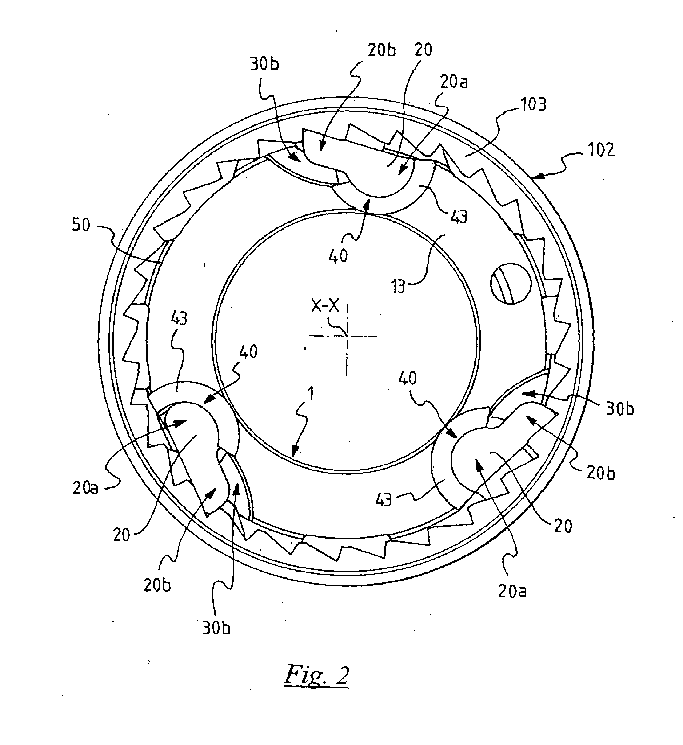

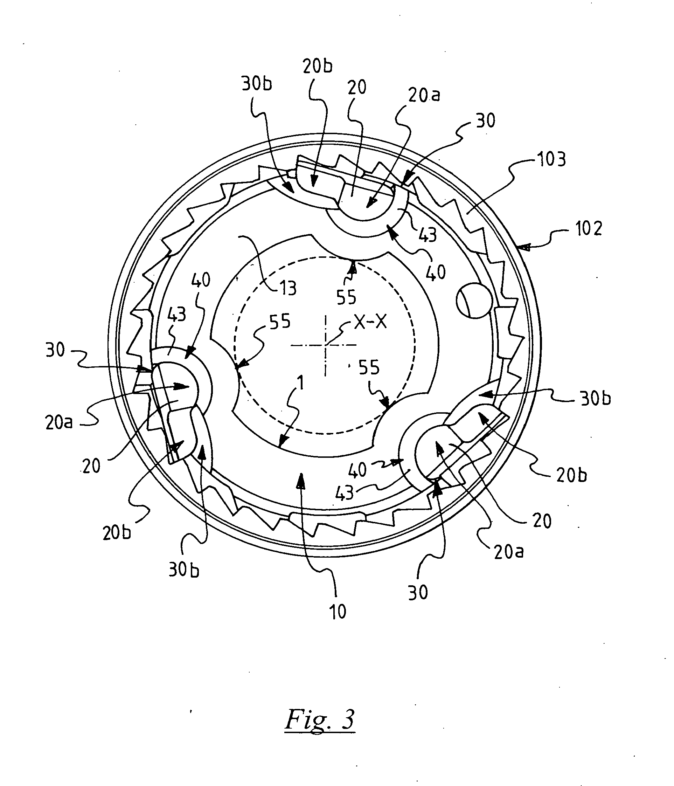

The one-way transmission device 1 of the present invention comprises a ring-shaped spring element 50 (only partially visible in figure 2) adapted to thrust the end portions 20b of the pawls 20 into a first operating positions thereof (shown in figures 2 and 3) wherein such portions 20b protrude from the pawl carrying body 10. Such ring-shaped spring element 50 is housed in a circumferential groove 18 formed on the external surface 11 of the pawl carrying body 10. The ring-shaped spring element 50 is also housed in a groove 45 extended for only a part of the substantially cylindrical side surface portion 41 of each pawl housing shell 40 and in a corresponding groove 25 formed in the pawls 20.

The ring-shaped spring element 50 elastically thrusts the support portions 20a of the pawls 20 towards the centre of the pawl carrying body 10 and the pawls 20, rotating, move their end portions 20b into their first operating position. In such operating position, the pawls 20 are capable of engaging a rack 103 formed on a hub body 102 to pull it in rotation, as will be more clearly explained further on.

As an alternative to the use of a single ring-shaped spring element 50 acting on all the pawls 20, it is possible to use a plurality of elastic thrusting means (not shown), each of which being housed in a respective seat 30 and acting on a respective pawl 20 to push it into its first operating position.

In a preferred embodiment shown in figure 3, the pawl carrying body 10 comprises, at each seat 30, a thickened zone 55 extending radially and towards the centre of the pawl carrying body 10 and adapted to provide the pawl carrying body 10 with greater structural resistance. The profile of the thickened zone 55 corresponds to that of the support portion 30a of seat 30.

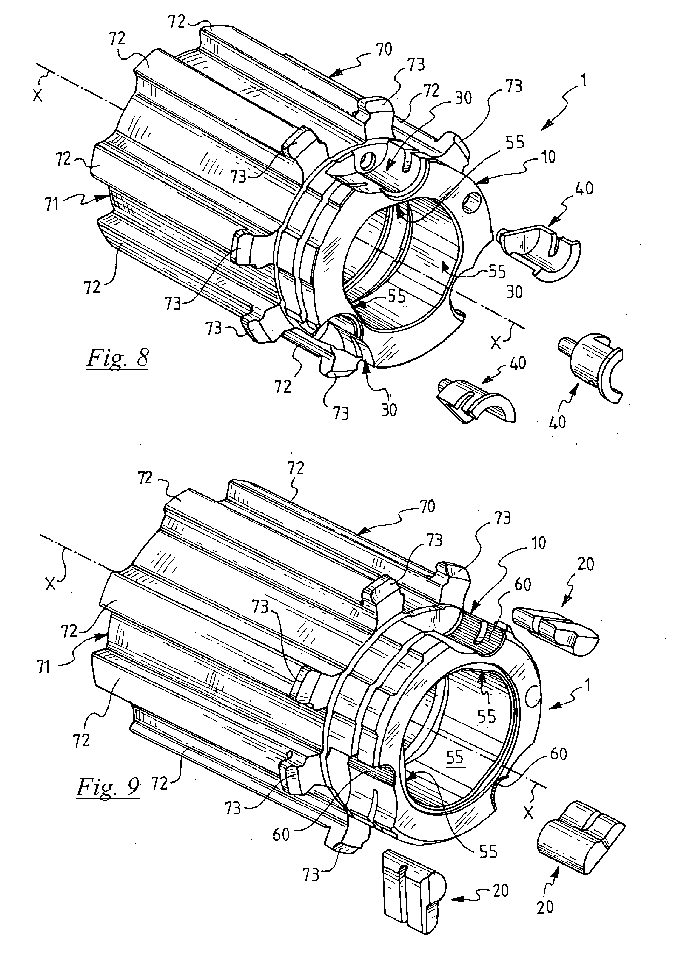

In the preferred embodiment of the one-way transmission device 1 described above, the pawl carrying body 10 is made as a single piece in a lightweight material (for example an aluminium alloy) with a' sprocket carrying body 70 of a conventional type, as shown in figure 8.

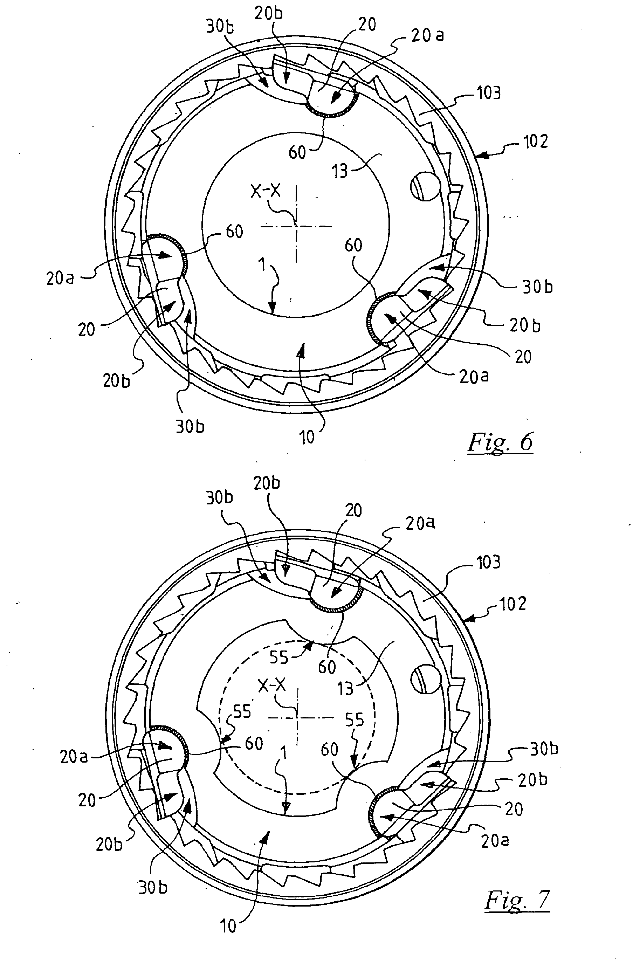

Figures 6, 7 and 9 show a second embodiment of the one-way transmission device 1 of the present invention that differs from that described above with reference to figures 1, 2, 3 and 7 only in that, in place of the pawl housing shells 40, a coating layer 60 is provided between each seat 30 and the respective pawls 20. The coating layer 60 is in wear-resistant material and is applied to each seat 30 by a surface deposition process. The thickness of the coating layer 60 shown in the attached figures is purely indicative.

The coating layer 60 can be applied to each seat by any one of the following processes: chemical or electro-chemical galvanic deposition, heat spraying starting from metallic, ceramic or cermet powders, Combustion technology, Electric wire-arc, Plasma technology.

In particular, the coating process is a chemical nickel plating carried out using Nichel baths (Chemical Nichel). The thickness of the coating layer 60 is chosen in the range from 5 to 100 µm, preferably from 10 to 25 µm.

In other variants of the present invention, it can be envisaged that the coating process be applied, in addition to each seat 30, to the whole pawl carrying body 10.

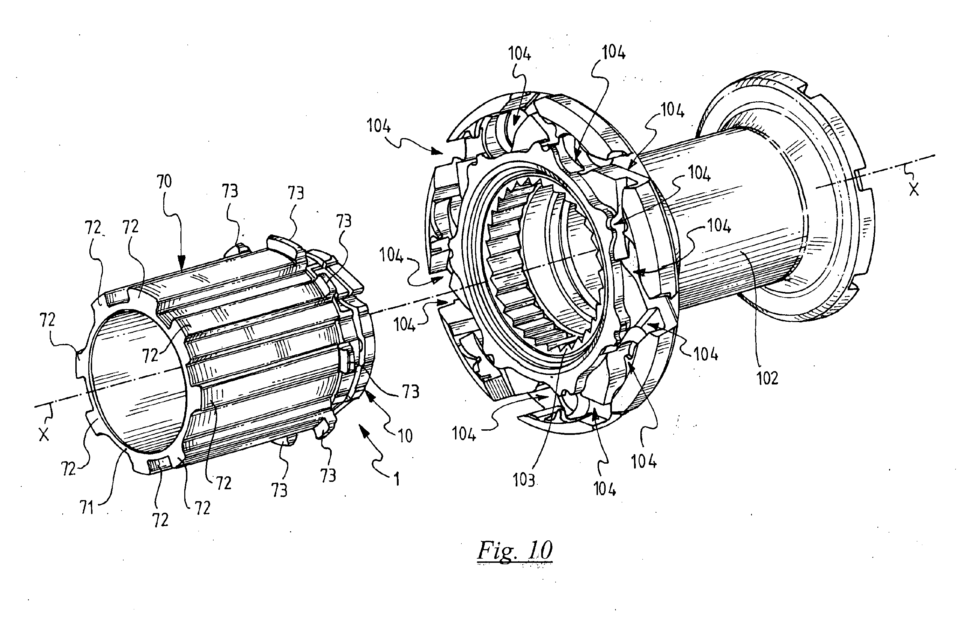

Also in this case, as shown in figure 7, the pawl carrying body 10 can comprise, at each seat 30, a thickened zone 55 extending radially and towards the centre of the pawl carrying body 10 and adapted to provide the pawl carrying body 10 with greater structural resistance. Furthermore, as shown in figure 9, the pawl carrying body 10 can be advantageously made as a single piece in a lightweight material (for example aluminium alloy) with a sprocket carrying body 70 of a conventional type. In this case, it can be envisaged that the coating process be applied, in addition to each seat 30 and to the pawl carrying body 10, also to the sprocket carrying body 70.

Alternatively, the pawl carrying body 10 can comprise connecting means, such as threading, for its integral coupling with the sprocket carrying body 70.

The sprocket carrying body 70 shown as an example in the figures from 8 to 12 comprises a tubular body 71 extending along the longitudinal axis X-X of the pawl carrying body 10 and comprises, on the external surface thereof, eight splines 72 for assembly of the sprockets. Such splines 72 are provided with end projections 73 against which the sprocket with the largest diameter is arranged.

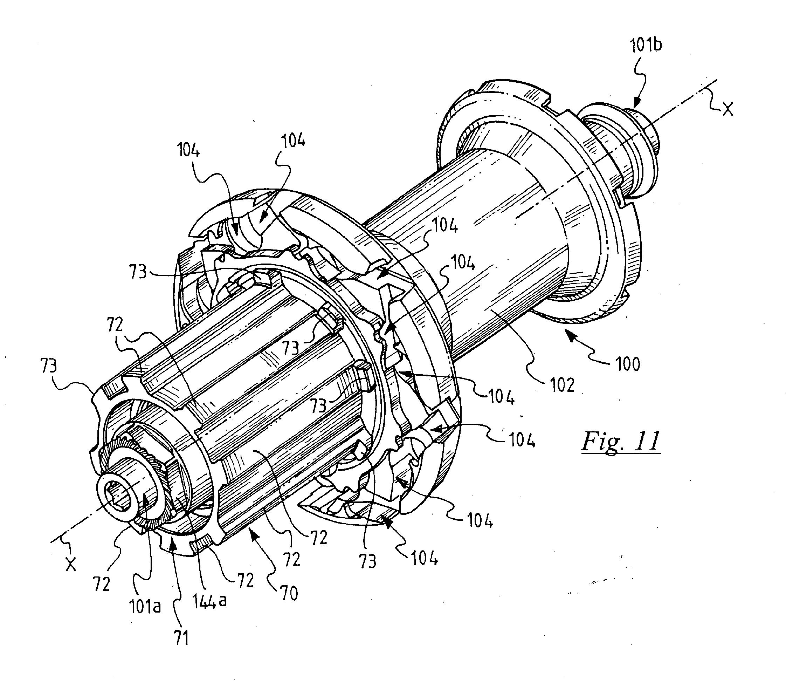

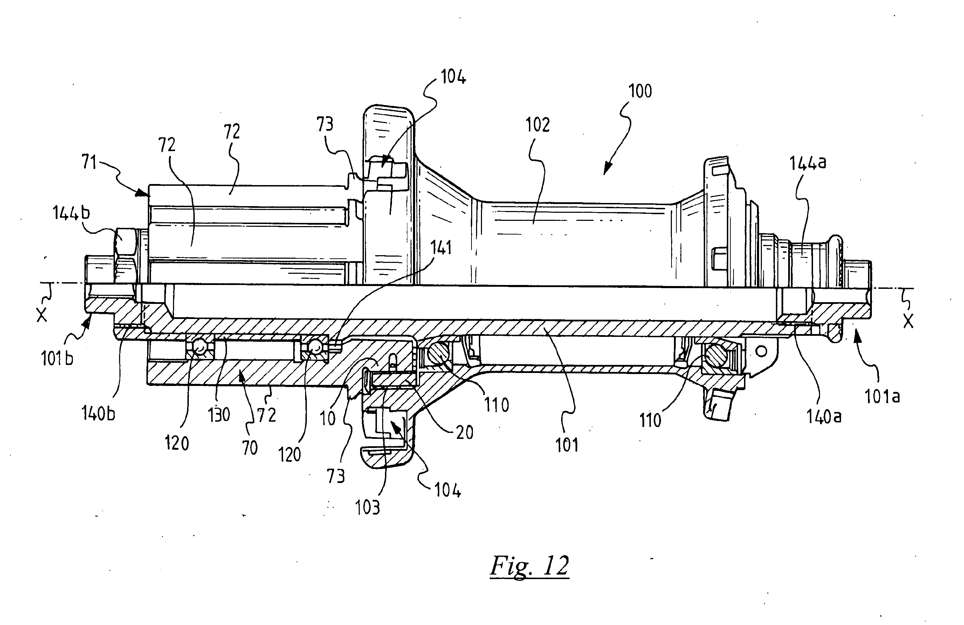

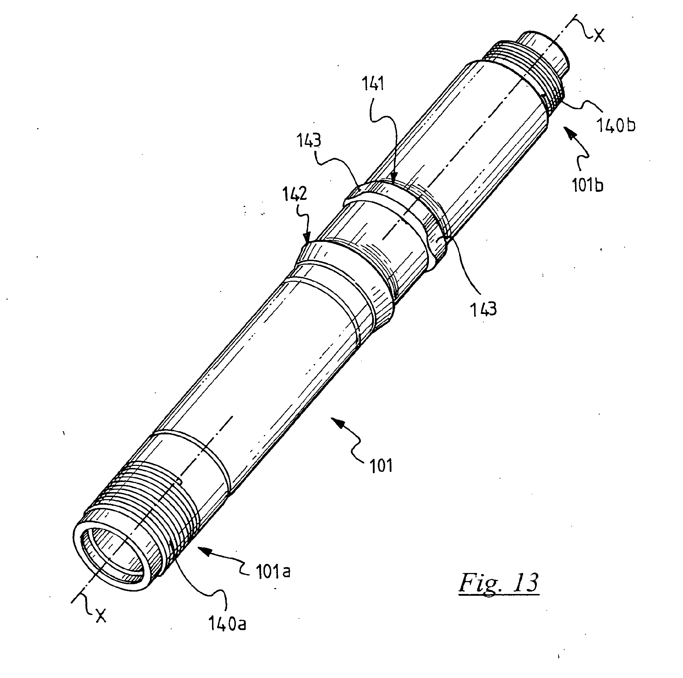

The one-way transmission device 1 described above is intended to be associated with a hub 100 of a rear wheel of a bicycle of conventional type. As shown in figure 12, which illustrates a hub for a rear wheel of a bicycle in assembled configuration, the hub 100 comprises a longitudinal hollow shaft 101 (shown in detail in figure 13) and a substantially tubular hub body 102 provided, at a free end thereof facing the pawl carrying body 10, with a ring-shaped rack 103 adapted to be engaged by the pawls 20 of the one-way transmission device 1 of the present invention. At such free end, the hub body 102 further comprises a plurality of seats 104 (shown in figures 10-12) for the attachment of the spokes of the bicycle wheel.

The assembly composed of the one-way transmission device 1 described above and the rack 103 constitutes a one-way coupling device which, together with the sprocket carrying body 70, constitute what is commonly known as a "freewheel".

The hub body 102 is pivotally mounted on the shaft 101 by the insertion of a pair of adjustment anti-friction bearings 110. In a similar manner, the sprocket carrying body 70 (which, in the examples shown in the attached figures, is integrally formed with the pawl carrying body 10 of the one-way transmission device 1 of the present invention) is pivotally mounted on the shaft 101 by the interposition of a pair of bearings 120. The bearings of the pair of bearings 120 are separated by means of a cylindrical spacer 130.

The rack 103 is integrally formed with the hub body 102.

The shaft 101 is adapted to be associated, at the free ends 101a and 101b thereof, with the forks of the bicycle frame and extends along the rotation axis of the wheel. As shown in figure 13, the shaft 101 comprises, at the opposite free end portions 101a and 101b, respective external threadings 140a, 140b and, at its intermediate portion, an abutment surface 141 and a frusto-conical ring-shaped zone 142.

The abutment surface 141 has a non-circular cross-section and has three depressed circumferential zones 143 (of which only two are visible in figure 13) that, during assembly, are positioned at the thickened zones 55 of the pawl carrying body 10.

During assembly, the sprocket carrying body 70 (integrally formed with the pawl carrying body 10) is fitted on the shaft 101 from the end 140b and a first head lock ring 144b is screwed onto the threading 140b of the shaft 101, pushing the pair of bearings 120 and the cylindrical spacer 130 against the abutment surface 141.

The hub body 102 is fitted onto the shaft 101 from the opposite end 140a. A second head lock ring 144a is screwed on the threading 101a of the shaft 101 to centre and block the hub body 102 on the shaft 101. The most internal bearing 110 is arranged co-axially and outwardly to the frusto-conical ring-shaped zone 142 of the shaft 101.

The head lock rings 144a and 144b are knurled externally to increase the grip against the rear forks of the bicycle frame when the hub 100 is fixed to the frame.

In operation, while the cyclist pedals to move the bicycle forwards, the sprocket carrying body 70, the pawl carrying body 10 and the hub body 102 rotate integrally and transmit the movement from the chain to the wheel. In such operating configuration, the pawls 20 are thrust by the ring-shaped spring element 50 into their first operating position in which the end portions 20b of the pawls 20 protrude from the pawl carrying body 10 and engage the rack 103, pulling it into rotation.

When the cyclist does not pedal, or pedals slowly, and the bicycle anyway travels forward, the sprocket carrying body 70 and the pawl carrying body 10 (that always rotate integrally) are free to rotate with respect to the hub body 102 with an angular speed that is lower than the angular speed of hub body itself. In such operating configuration, the pawls 20 are thrust by the teeth of the rack 103, radially and inwardly and run along the rack 103 allowing the rack 103 to freely rotate with respect to the sprocket carrying body 70.

## Claims

1. One-way transmission device (1) for a hub of a rear wheel of a bicycle, comprising:
- a pawl carrying body (10);
- a plurality of pawls (20) housed in respective seats (30) formed on said pawl carrying body (10);
**characterised in that** said pawl carrying body (10) is made of a material that is lighter in weight than that of said plurality of pawls (20).

2. Device according to claim 1, wherein said pawl carrying body (10) is made of an aluminium alloy.

3. Device according to claim 1 or 2, also comprising contacting means (40, 60) in wear-resistant material interposed between each pawl (20) of said plurality of pawls and the respective seat (30).

4. Device according to claim 3, wherein said contacting means (40, 60) comprises a pawl housing shell (40) integrally associable with said seat (30).

5. Device according to claim 4, wherein said pawl housing shell (40) has a shape that is substantially conjugated to that of at least part of said seat (30) and to that of at least part of said pawl (20).

6. Device according to claim 5, wherein said pawl housing shell (40) comprises a substantially cylindrical side surface portion (41) arranged in abutment against a corresponding substantially cylindrical side surface portion (31) of said seat (30) and acting as an abutment surface for a corresponding substantially cylindrical side surface portion (21) of said pawl (20) and, at a first free end thereof, a substantially flat first front surface (42) extending in a perpendicular direction to a generatrix of said substantially cylindrical side surface portion (41), said first front surface (42) being arranged in abutment against a substantially flat front surface (32) of said seat (30) and acting as an axial abutment surface for a corresponding substantially flat first front surface (22) of said pawl (20).

7. Device according to claim 6, wherein said pawl housing shell (40) comprises, at a second free end opposite to said first free end, a substantially flat second front surface (43) parallel to the first front surface (42) and protruding from said substantially cylindrical side surface portion (41) on the opposite side of said first front surface (42), wherein said second front surface (43) is arranged in abutment against a corresponding abutment surface (33) formed on a front surface (13) of said pawl carrying body (20).

8. Device according to any of the claims from 4 to 7, wherein said pawl housing shell (40) comprises a pin (44) mechanically coupled to an opening (36) formed on said seat (30).

9. Device according to claim 8 as dependent on claim 6, wherein said pin (44) is formed in an eccentric position on said first front surface (42) and said opening (36) is formed in an eccentric position on said front surface (32) of said seat (30).

10. Device according to any of the claims from 4 to 7, wherein said pawl housing shell (40) is associated with said seat (30) by the interposition of adhesive means.

11. Device according to any of the claims from 3 to 10, wherein said pawl housing shell (40) is made of the same material as that of said pawls (20).

12. Device according to any of the claims from 3 to 11, wherein said pawl housing shell (40) is made of steel.

13. Device according to any of the claims from 3 to 11, wherein said pawl housing shell (40) is made of titanium or with sinterised material.

14. Device according to any of the claims from 6 to 13, wherein said pawl carrying body (10) is substantially ring-shaped and wherein said pawl housing shell (40) comprises a groove (45) that extends circumferentially for part of said substantially cylindrical side surface portion (41) and arranged at a respective groove (25) formed on said pawls (20) and at a circumferential groove (18) formed on an external surface (11) of said pawl carrying body (10).

15. Device according to claim 14, comprising a ring-shaped spring element (50) housed in the circumferential groove (18) formed on said pawl carrying body (10), in the groove (45) formed on said pawl housing shell (40) and in the groove (25) formed on each pawl (20), and acting on each pawl to maintain an end portion (20b) of said pawl (20) radially thrust outwardly.

16. Device according to claim 3, wherein said contacting means (40, 60) comprises a coating layer (60) applied on each seat (30) of said plurality of seats by means of a surface deposition process.

17. Device according to claim 16, wherein said coating layer is applied to the whole of said pawl carrying body (10).

18. Device according to claim 16, wherein said coating layer (60) has a thickness between 5 and 100 µm.

19. Device according to claim 18, wherein said coating layer (60) has a thickness between 10 and 25 µm.

20. Device according to any of the claims from 16 to 19, wherein said coating layer (70) is applied by any one of the following processes: chemical or electro-chemical galvanic deposition, heat spraying starting from metallic, ceramic or cermet powders, Combustion technology, Electric wire-arc, Plasma technology.

21. Device according to any of the claims from 1 to 13 and from 16 to 20, comprising elastic thrusting means housed in each seat (30) of said plurality of seats and acting on said pawls (20) to maintain one end portion (20b) of said pawls (20) radially thrust outwardly.

22. Device according to any of the previous claims, wherein said seats (30) are formed on an external surface (11) of said pawl carrying body (10) and wherein said pawl carrying body (10) is substantially ring-shaped and comprises, at each seat (30), a thickened zone (55) extending radially and inwardly.

23. Device according to any of the previous claims, wherein said pawl carrying body (10) comprises connecting means for integral coupling to a sprocket carrying body (70).

24. Device according to any of the claims from 1 to 22, further comprising a sprocket carrying body (70) integrally formed with said pawl carrying body (10).

25. Pawl carrying body (10) for a one-way transmission device (1) of a hub of a rear wheel of a bicycle, **characterised in that** it is made of an aluminium alloy.

26. Pawl carrying body (10) according to claim 25, comprising a plurality of.seats (30) for housing respective pawls (20) and a coating layer (70) of wear resistant material applied onto each seat (30) of said plurality of seats by a surface deposition process.

27. Pawl carrying body (10) according to claim 26, wherein said coating layer (70) is applied by any one of the following processes: chemical or electro-chemical galvanic beading, heat spraying starting from metallic, ceramic or cermet powders, Combustion technology, Electric wire-arc, Plasma technology.

28. Pawl carrying body (10) according to any of the claims from 25 to 27, comprising a substantially ring-shaped body and a sprocket carrying body (70) integrally formed with said substantially ring-shaped body.

29. Hub (100) for a rear wheel of a bicycle, comprising a longitudinal shaft (101) and, fitted on said longitudinal shaft (101), a hub body (102) having a substantially tubular shape and provided, at a free end thereof, with a ring-shaped rack (103) and a one-way transmission device (1) according to any of the claims from 1 to 24, said rack (103) being integral in rotation with the pawl carrying body (10) of said one-way transmission device (1) when said pawls (20) are in a first operating position and being free to rotate with respect to said pawl carrying body (10) when its angular speed is greater than that of said pawl carrying body (10).

30. Hub according to claim 29, wherein said longitudinal shaft (101) has, circumferentially, one or more depressed zones (143) defined on a ring-shaped abutment element (141).
